# EUROPÄISCHE PATENTSCHRIFT

(11) **EP 1 088 474 B1**
(45) Veröffentlichungstag und Bekanntmachung des Hinweises auf die Patenterteilung: **24.03.2004**
(21) Anmeldenummer: 00121097.0
(22) Anmeldetag: 28.09.2000
(51) Int. Cl.: A01B 3/46

(54) **Pflug mit Hubvorrichtung**
Plow with lifting device
Charrue avec dispositif de levage

(30) Priorität: 01.10.1999 DE 19947170
(43) Veröffentlichungstag der Anmeldung: 04.04.2001
(73) Patentinhaber: Lemken GmbH & Co. KG, 46519 Alpen (DE)
(72) Erfinder: Meurs, Wilhelm, 46519 Alpen (DE)
(74) Vertreter: Schulte, Jörg, Dipl.-Ing.

(56) Entgegenhaltungen:
- EP-A- 0 019 275
- DE-U- 29 815 053
- FR-A- 2 310 686
- FR-A- 2 623 686
- GB-A- 2 013 461

## Beschreibung

Die Erfindung betrifft einen Pflug mit einem Anbauturm für die Verbindung mit einem Zugfahrzeug, mit einem Pflugrahmen mit mindestens zwei Pflugkörpern mit einem endseitig am Pflugrahmen angeordnetem Fahrwerk mit mindestens einem Stützrad und mit einem zusätzlichen Pflugrahmen mit mindestens zwei Pflugkörpern, wobei der Pflugrahmen über einen Zugbalken mit dem Anbauturm gelenkig verbunden und über eine Drehvorrichtung aus einer in die andere Arbeitsstellung sowie in die Transportstellung schwenkbar ist.

Bei Pflügen mit Fahrwerk und zusätzlichem Pflugrahmen soll der vordere Pflugrahmen z. B. beim Erreichen des Vorgewendes in Arbeitsstellung ausgehoben werden, um den hinteren Pflugrahmen noch weiter arbeiten zu lassen. Erst wenn auch der hintere Pflugrahmen das Vorgewende erreicht hat, erfolgt der Drehvorgang des gesamten Pflugrahmens. Ein derartiger Pflug ist dem europäischen Patent EP 566 821 zu entnehmen. Dieser Pflug ist für den Anbau an ein Zugfahrzeug mit Hubhydraulik geeignet und kann nicht mit Zugfahrzeugen eingesetzt werden, die keine eigene Hubhydraulik besitzen. Insbesondere große Traktoren und Raupen weisen häufig aus Kostengründen keine eigene Hubhydraulik auf und können daher nicht mit einem leistungsfähigen und modernen Pflug eingesetzt werden. Aus der DE-GM 298 15 053 ist ein Aufsattel-Drehpflug mit einem vom Zugfahrzeug unabhängigen Hydraulikzylinder bekannt, über den der Stabilisator oder das Traggestänge verkürzt oder verlängert werden kann. Damit wird der Pflugrahmen beim Drehvorgang enger an den Stabilisator herangeholt, um eine günstigere Schwenkkurve zu erreichen. Ein solcher Pflug ist nicht mit einem zusätzlichen Pflugrahmen ausgerüstet und unterliegt damit anderen Gesetzmäßigkeiten.

Der Erfindung liegt daher die Aufgabe zugrunde, einen Pflug mit Fahrwerk und zusätzlichen Pflugrahmen zu schaffen, der unabhängig von der Zugfahrzeugausführung in der Arbeitsstellung aushebbar ist.

Die Aufgabe wird erfindungsgemäß durch die Merkmale des Anspruches 1 gelöst.

Dadurch kann der Pflug auch mit Zugfahrzeugen eingesetzt werden, die keine eigene Hubhydraulik besitzen. Über die pflugeigene Hubhydraulik kann der Pflugrahmen jederzeit problemlos eingesetzt und dabei ausgehoben werden. Vorteilhaft kann er mit allen Zugfahrzeugtypen eingesetzt und letztlich kann sogar auf die extrem teure Hubhydraulik beim Traktor selbst verzichtet werden.

Zusätzlich ist vorgesehen, dass die beiden Teile des Traggestänges über eine horizontale quer zur Arbeitsrichtung angeordneten Schwenkachse gelenkig miteinander verbunden sind, wobei die Schwenkachse in Arbeitsrichtung mindestens 50 cm hinter einer Querachse angeordnet ist, dass der Hydraulikzylinder, der im Abstand zur Schwenkachse gelenkig mit dem vorderen Teil und dem hinteren Teil verbunden ist und dass der Pflugrahmen sich über die Drehvorrichtung um eine zum vorderen Teil quer angeordnete Achse auf das vordere Teil abstützend ausgebildet ist. Dadurch wird sichergestellt, dass die Aushubvorrichtung genau dort vorgesehen ist, wo ein Ausheben effektiv ist. Weiter ist vorgesehen, dass die Hubhydraulik eine Anhebung des Pflugrahmens im Bereich der quer angeordneten Achse um mindestens 40 cm, vorzugsweise 60 cm bewirkend ausgebildet ist. Dies erlaubt ein Ausheben des Pflugrahmens um einen größeren Betrag als den der Arbeitstiefe, sodass eine Kehrfahrt auf dem Vorgewende problemlos möglich ist.

Nach einer zweckmäßigen Ausführungsform ist vorgesehen, dass der Hydraulikzylinder im Abstand zu einer mit einem Anschlusspunkt ausgerüsteten Querachse, um die der Anbauturm schwenkbar ist, mit dem Anbauturm und damit dem Zugfahrzeug verbunden ist und dass der Zugbalken endseitig im Abstand von mindestens 50 cm eine Querachse aufweist, über die der vordere Teil des Traggestänges gelenkig mit dem Zugbalken verbunden und bei Betätigung des Hydraulikzylinders den Pflugrahmen aushebend ausgebildet ist. Dadurch ist es möglich, dass über einen Hydraulikzylinder, der zwischen Zugfahrzeug und Verbindungseinrichtung vorgesehen ist, der Pflugrahmen ausgehoben werden kann. Aufgrund des großen Abstandes zwischen den beiden Querachsen, ist ein ausreichender Hebelarm geschaffen, der ausreicht, den Pflugrahmen mehr als ausreichend auszuheben.

Nach einer zweckmäßigen Ausbildung ist vorgesehen, dass das Traggestänge mindestens zweiteilig mit einem vorderem Teil und einem hinterem Teil ausgebildet ist und mit dem vorderen Teil über eine zugleich den Zugpunkt bildende Querachse und den Zugbalken mit dem Anbauturm und mit dem hinteren Teil kreuzgelenkartig über ein Gelenk mit dem Pflugrahmen verbunden ist.Dadurch wird in einfacher Weise eine effektive und kostengünstige Hubvorrichtung geschaffen, die problemlos beim Pflug eingesetzt werden kann.

Erfindungsgemäß ist weiter vorgesehen, dass der Zugbalken über eine aufrechte Achse schwenkbar mit dem Anbauturm verbunden ist.

Weiter ist vorgesehen, dass der zusätzliche Pflugrahmen mittelbar mit dem Pflugrahmen längsverschiebbar, kardanisch und verdrehfest verbunden ist und dass zwischen dem Pflugrahmen und dem zusätzlichen Pflugrahmen ein Regelgetriebe vorgesehen ist, das die Höhenlage des Zugpunktes des zusätzlichen Pflugrahmens regelnd ausgebildet ist. Dadurch kann der zusätzliche Pflugrahmen problemlos geführt werden.

Erfindungsgemäß ist weiter vorgesehen, dass das Fahrwerk eine in Arbeitsstellung des Pfluges horizontal und in Längsrichtung angeordnete Schwenklagerung mit Schwenkachse und einen um die Schwenkachse schwenkenden Kuppelrahmen aufweist, der einerseits mit dem hinteren Ende des Pflugrahmens verbunden ist und andererseits eine Kuppelrahmenerweiterung aufweist, wobei der Kuppelrahmen eine kulissenförmige Führung aufweist, die mit der Kulisse der Kuppelrahmenerweiterung längsverschiebbar, kardanisch und verdrehfest verbunden ist. Dadurch wird sichergestellt, dass der zusätzliche Pflugrahmen über Mittel verfügt, die eine seitliche und auch vertikale Anpassung an die jeweiligen Bodenverhältnisse erlaubt, unabhängig vom Pflugrahmen.

Erfindungsgemäß ist weiter vorgesehen, dass die Kuppelrahmenerweiterung eine in Arbeitsstellung des Pfluges horizontal und in Längsrichtung angeordnete Schwenklagerung mit Schwenkachse aufweist mit schwenkbar zur Kuppelrahmenerweiterung angeordnetem Stützarm und Stabilisierungsstreben und dass der zusätzliche Pflugrahmen mit der Kuppelrahmenerweiterung verdrehfest verbunden ausgebildet ist. Diese besondere Verbindung des zusätzlichen Pflugrahmens mit dem Pflugrahmen hat den Vorteil, dass sowohl der Pflugrahmen als auch der zusätzliche Pflugrahmen einfach ausgebildet ist und alle schwenkenden und regelnden Teile am Fahrwerk, am Kuppelrahmen oder an der Kuppelrahmenerweiterung angeordnet sind. Der Pflugrahmen und auch der zusätzliche Rahmen werden so nicht unnötig kompliziert aufgebaut und nicht unnötig geschwächt.

Erfindungsgemäß ist weiter vorgesehen, dass das Fahrwerk einen Zugarm mit Zugachse aufweist, der den Stützarm und damit die Kuppelrahmenerweiterung mit zusätzlichem Pflugrahmen ziehend ausgebildet ist. Dadurch wird auf einfache Weise der zusätzliche Pflugrahmen gezogen.

Erfindungsgemäß ist weiter vorgesehen, dass das Regelgetriebe aus der kulissenförmigen Führung mit Kulisse in Verbindung mit dem Zugarm, der Zugachse und dem Stützarm gebildet wird. Über diese einfachen Bauteile wird ein Regelgetriebe geschaffen, das selbstregelnd und funktionssicher ist. Komplizierte und teure Regelkomponenten sind nicht erforderlich.

Erfindungsgemäß ist weiter vorgesehen, dass der Stützarm eine Kurvenbahn aufweist und auf der Zugachse eine Rolle vorgesehen ist, die auf der Kurvenbahn abrollend angeordnet ist. Hierdurch wird sichergestellt, dass das Regelgetriebe, das während der Arbeit ständig den Zugpunkt regelt praktisch keinem Verschleiß unterworfen ist und aufgrund der Kurvenbahn hinsichtlich der Regelcharakteristik optimal voreingestellt werden kann.

Zusätzlich sieht die Erfindung vor, dass auf der Zugachse ein Hebel gelagert ist, der die Rolle und die Anlenkpunkte für einen Zuglenker und einen Lenker aufnimmt, wobei der Zuglenker mit dem Zugarm und der Lenker mit dem Stützarm verbunden und zusammen mit der kulissenförmigen Führung als Regelgetriebe arbeitend ausgebildet sind. Dadurch kann die zuvor beschriebene etwas träger reagierende Zugpunktregelung intensiviert werden, da über dieses "Hebelgetriebe" bei einer geringfügigen Winkelveränderung des zusätzlichen Pflugrahmens eine große Regelkorrektur erfolgt.

Erfindungsgemäß ist weiter vorgesehen, dass der Zuglenker längenveränderbar, vorzugsweise als Hydraulikzylinder ausgebildet ist. Mit dieser Ausführung kann in einfacher Weise die Lage des zusätzlichen Pflugrahmens verändert oder ganz blockiert werden. Letzteres ist dann erforderlich, wenn der zusätzliche Pflugrahmen für die Transportfahrt vollständig ausgehoben werden muss. Mit dem Hydraulikzylinder kann der zusätzliche Pflugrahmen unabhängig vom Pflugrahmen ausgehoben werden.

Erfindungsgemäß ist weiter vorgesehen, dass die Pflugkörper des Pflugrahmens schwenkbar mit dem Pflugrahmen verbunden sind mit einer die Parallelführung der Pflugkörper bewirkenden Stange, dass der mit dem Fahrwerk verbundene Kuppelrahmen über eine senkrechte Achse mit dem Pflugrahmen verbunden und über eine Steuerstange parallel zu den Pflugkörpern führbar ausgebildet ist. Dies stellt sicher, dass die erfindungsgemäße Regelung des Zugpunktes auch bei Aufsatteldrehpflügen einsetzbar ist, bei denen die Arbeitsbreite pro Körper veränderbar ist.

Erfindungsgemäß ist weiter vorgesehen, dass sowohl der Pflugrahmen als auch der zusätzliche Pflugrahmen über je einen Hydraulikzylinder um die jeweilige senkrechte Achse verschwenkbar ausgebildet sind. Dies ermöglicht die Verstellung der Arbeitsbreite pro Körper gemäß Stand der Technik.

Weiter ist vorgesehen, dass die Hydraulikzylinder über einen schlepperseitigen Mengenteiler jeweils mit der für die parallele Verschwenkung der Pflugkörper erforderliche Ölmenge versorgt ausgebildet sind. Über den schlepperseitigen Mengenteiler werden die Hydraulikzylinder mit einer voreingestellten Ölmenge versorgt, um so die Arbeitsbreite pro Körper um den voreingestellten Betrag zu verändern.

Erfindungsgemäß ist weiter vorgesehen, dass der Hydraulikzylinder für die Verstellung der Arbeitsbreite pro Körper des zusätzlichen Pflugrahmens im Durchmesser gleich oder kleiner ausgebildet ist als der entsprechende Hydraulikzylinder des Pflugrahmens und dass jeder Hydraulikzylinder mit fernbedienbaren, den Hubweg der Hydraulikzylinder begrenzenden Begrenzungsanschlägen oder -ventilen ausgerüstet sind. Damit ist es möglich, insbesondere den zusätzlichen Pflugrahmen mit einem preisgünstigeren kleineren Zylinder auszurüsten, der dennoch die Arbeitsbreite pro Körper verändert, und zwar um den gleichen Betrag wie die des Pflugrahmens.

Erfindungsgemäß ist weiter vorgesehen, dass die beiden Hydraulikzylinder hydraulisch kommunizierend miteinander verbunden sind. Beide Hydraulikzylinder werden dann um exakt den gleichen Betrag ein- und ausgefahren und gewährleisten so, dass sowohl die Arbeitsbreite pro Körper des Pflugrahmens als auch die des zusätzlichen Pflugrahmens exakt um den gleichen Betrag verstellt werden.

Erfindungsgemäß ist weiter vorgesehen, dass die Hydraulikzylinder unabhängig voneinander betätigbar ausgebildet sind, dass die Arbeitsbreite pro Pflugkörper des zusätzlichen Pflugrahmens unabhängig von der Arbeitsbreite des Pflugrahmens breiter oder schmaler einstellbar ist und dass die kardanische Verbindung des Pflugrahmens und des zusätzlichen Pflugrahmens eine seitliche Verschwenkbarkeit des zusätzlichen Pflugrahmens von mindestens + 10° und - 10° zulassend ausgebildet ist. Mit dieser besonderen Einstellungsmöglichkeit ist es möglich, den für die Pflugarbeit in der Arbeitsbreite pro Körper optimal eingestellten Pflugrahmen in seiner Breiteneinstellung zu belassen und Arbeitsbreitenkorrekturen der gesamten Pflugkombination im Bereich des seitlichen Feldrandes durch Verstellen des zusätzlichen Pflugrahmens auszugleichen. Falls während der Pflugarbeit ein Baum oder Mast im Bereich des zusätzlichen Pflugrahmens steht, braucht auch nur dieser auf eine schmalere Arbeitsbreite eingestellt werden, um das Hindernis zu passieren. Die Arbeitsbreite des Pflugrahmens selbst braucht deswegen nicht verändert werden.

Erfindungsgemäß ist weiter vorgesehen, dass die Hubhydraulik, die Stellvorrichtungen für die Arbeitstiefe, die Neigung, die Arbeitsbreite pro Pflugkörper und die Drehvorrichtung des Pfluges über einen Bordcomputer betätigbar ausgebildet sind, und dass das Ausheben, das Absenken und das Drehen des Pflugrahmens und des zusätzlichen Pflugrahmens jeweils am Feldende und -anfang automatisch ablaufend ausgebildet sind. Dadurch ist es möglich, den Pflug exakt am Feldende auszuheben und hinsichtlich der Arbeitsbreite zu programmieren bzw. die Arbeitsbreite um vorprogrammierte Werte zu verändern. In Verbindung mit im Bordcomputer einprogrammierten Felddaten und Feldranddaten wird der Pflugrahmen kurz vor Erreichen des Feldendes über die eigene Hubvorrichtung wie gewünscht ausgehoben, der zusätzliche Pflugrahmen ausgehoben und die Drehung eingeleitet. Nach der Kehrfahrt auf dem Vorgewende wird der Pflugrahmen und der zusätzliche Pflugrahmen wieder so eingesetzt, dass ein optimales gerades und kurzes Vorgewende erzielt wird.

Weiter ist vorgesehen, dass der zusätzliche Pflugrahmen vor dem Drehvorgang oder während des Drehvorganges einschwenkbar und nach Beendigung dieses Drehvorganges wieder ausschwenkend ausgebildet ist.

Die Erfindung zeichnet sich u. A. dadurch aus, dass eine dem Pflug oder Anhängedrehpflug zugeordnete Hubhydraulik geschaffen ist, mit dem der angehängte oder aufgesattelte Pflug auch unabhängig von dem Typ des Zugfahrzeuges jeweils ausgehoben werden kann, sodass diese Pflüge mit jeder Art von Zugfahrzeug eingesetzt werden können. Festzuhalten ist, dass die zum Einsatz kommende Hubhydraulik sowohl für Aufsatteldrehpflüge wie auch für Anhängedrehpflüge verwendbar ist.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: den erfindungsgemäßen Pflug in Arbeitsstellung in Draufsicht,
- Figur 2: den erfindungsgemäßen Pflug in halbgedrehter Stellung in Seitenansicht,
- Figur 3: eine Detailansicht der Hubvorrichtung des Pfluges in halbgedrehter Stellung,
- Figur 4: eine Detailansicht des Pfluges in ausgehobener und halbgedrehter Stellung und
- Figur 5: eine Ausführung einer Aushubvorrichtung nicht gemäß der Erfindung.

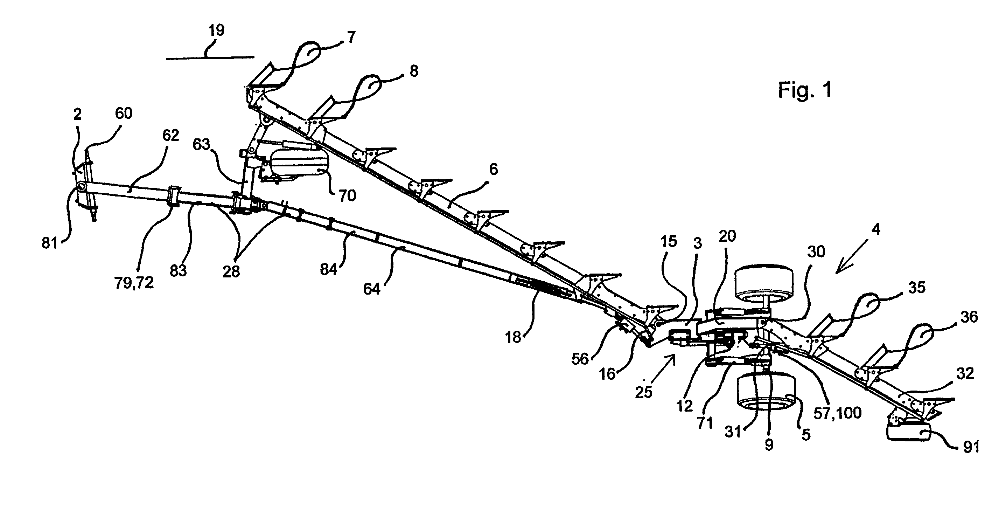

Figur 1 zeigt den erfindungsgemäßen Pflug als Pflug 1 mit einem Anbauturm 2. Der Anbauturm 2 weist die Anlenkpunkte 60, 61 für die Verbindung mit einem nicht dargestellten Zugfahrzeug auf. Der Anbauturm 2 ist über einen Zugbalken 62 mit der Drehvorrichtung 63 und dem Zugrahmen 64 verbunden. Der Zugrahmen 64 ist am gegenüberliegenden Ende mit einem schwenkbaren und nach unten auskragenden Schwenkarm 65 kreuzgelenkartig mit dem Pflugrahmen 6 verbunden, wobei sich der Verbindungspunkt 17 tief unterhalb des Pflugrahmens 6 befindet. Der Zugrahmen 64 ist mittelbar verdrehfest mit dem Anbauturm 2 verbunden und hält so den Schwenkarm 65 in der zuvor beschriebenen Position. Während der Pflugarbeit befindet sich dadurch der rahmenseitige Zugpunkt 24 oder 72 weit unterhalb des Pflugrahmens 6, sodass der Pflugrahmen 6 während der Arbeit stabilisierend nach oben gezogen wird und daher ohne Stabilitätseinbußen leichter dimensioniert werden kann.

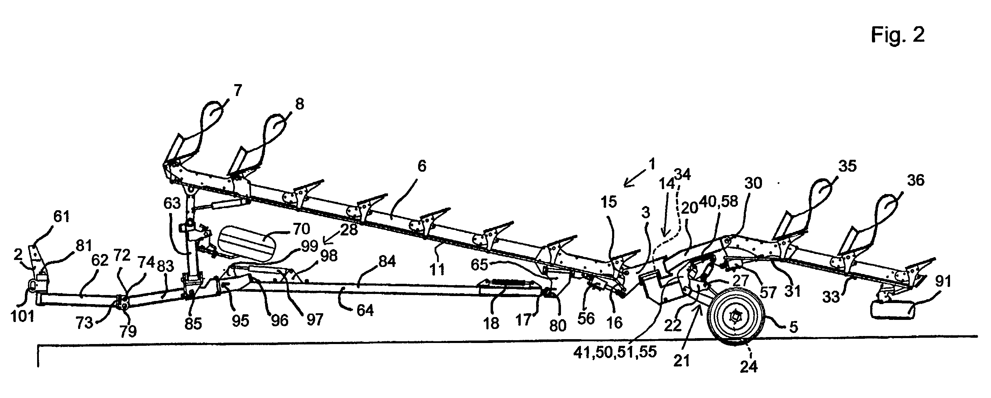

Die besondere Art der Anlenkung des Schwenkarms 65 ist in Figur 2 dargestellt. Der Pflugrahmen 6 und der Zugbalken 62 mit dem Zugrahmen 64 sind über die Drehvorrichtung 63 mit Wendelenker 66 verbunden. Der Wendelenker 66 ist längenveränderbar ausgebildet, um so den Anbauturm 2 in einem unterschiedlichen Abstand zur Furchenkante 19 zu verlagern. Dadurch ist es möglich mit dem Pflug 1 mit dem Zugfahrzeug "in der Furche" oder "auf dem Land" zu fahren. Ein Tastrad 70 führt den Pflugrahmen 6 vorne bzw. entlastet das Dreipunktgestänge des Zugfahrzeuges, wenn mit dem Zugfahrzeug auf dem Land gepflügt wird. Das Tastrad 70 kann in eine Mittelstellung gebracht und dort fixiert werden, falls dies einsatzabhängig gewünscht oder gefordert ist, z.B. wenn "in der Furche" gepflügt werden soll.

Heckseitig wird der Pflugrahmen 6 des Pfluges 1 von dem Fahrwerk 4 getragen, wobei das Fahrwerk 4 über die senkrechte Achse 15 und der Steuerstange 16 so mit dem Pflugrahmen 6 verbunden ist, dass es zu den Pflugkörpern 7, 8 während der Arbeit parallel geführt wird. Die Parallelführung der Pflugkörper 7, 8 zueinander wird über die Stange 11 und die Verschwenkung der Pflugkörper 7, 8 und des Fahrwerkes 4 zum Pflugrahmen 6 über einen Hydraulikzylinder 56 bewirkt, der mit dem Pflugrahmen 6 und dem Kuppelrahmen 3 im Abstand zur senkrechten Achse 15 verbunden ist. Der Kuppelrahmen 3 ist schwenkbar über eine Schwenklagerung 12 mit Schwenkachse 13 mit dem Fahrwerk 4 verbunden. Das Fahrwerk 4 weist einen Zugarm 22 und eine Verbindungsvorrichtung 14 auf mit kulissenförmiger Führung 25, in der eine Kulisse 34 längsverschiebbar, kardanisch und verdrehfest geführt ist.

Die Kulisse 34 ist Bestandteil einer Kuppelrahmenerweiterung 20, an der der zusätzliche Pflugrahmen 32 um die Achse 30 schwenkbar angebaut ist.

Auf der Zugachse 27 ist ein Hebel drehbar gelagert, der eine Rolle aufnimmt und an dem Anlenkpunkte für einen Zuglenker 50 und einen Lenker 51 vorgesehen sind, wobei der Zuglenker 50 mit dem Zugarm 22 und der Lenker 51 mit dem Stützarm 41 verbunden und zusammen mit der kulissenförmigen Führung 25 als Regelgetriebe 21 arbeitend vorgesehen ist. Mit 40 ist die Schwenklagerung bezeichnet, die in Längsrichtung angeordnet und mit einer Schwenkachse 58 versehen ist.

Am zusätzlichen Pflugrahmen 32 sind die einzelnen Pflugkörper 35, 36 schwenkbar verbunden und werden über die Stange 33 geführt.

Die Schnittbreitenänderung bzw. die Arbeitsbreitenänderung pro Pflugkörper 35, 36 erfolgt über den Hydraulikzylinder 57. Die Parallelführung des zusätzlichen Pflugrahmens 32 zur Fahrwerkserweiterung wird über die Steuerstange 31 vorgegeben. Die mittelbare längsverschiebbare, kardanische und verdrehfeste Verbindung des zusätzlichen Pflugrahmens 32 mit dem Pflugrahmen 6 lässt eine seitliche individuelle Anpassung des zusätzlichen Pflugrahmens 32 sowie eine von der Arbeitsbreite pro Pflugkörper des Pflugrahmens 6 abweichende Arbeitsbreite pro Pflugkörper zu.

Das Fahrwerk 4 weist eine quer zur Fahrtrichtung verlaufende Achse 9 auf, die links und rechts mit Stützrädern 5 versehen ist. Die Arbeitstiefe des Pflugrahmens 6 wird hinten über die Hydraulikzylinder 71 eingestellt. Dies ist insbesondere den Figuren 1 und 2 zu entnehmen.

Figur 2 zeigt zusätzlich, dass der vertikale Zugpunkt 72 des Zugbalkens 62 und damit des gesamten Pfluges 1 einstellbar ist. Zwei unterschiedliche vorwählbare Zugpunktpositionen bzw. Zugpunktstellungen 73 und 74 sind hier vorgesehen. Zusätzlich kann mit der Stellvorrichtung mit Schwenkachse 95 und Hydraulikzylinder 97 der Pflugrahmen 6 in Relation zum Zugpunkt 72 ausgehoben werden.

Die Pflugkörper 7, 8 sind über Körperhalme mit dem Pflugrahmen 6 verbunden. Dabei ist es denkbar, dass die Pflugkörper 7, 8 über Abschersicherungen verfügen und/oder automatische Überlastsicherungen aufweisen, die ein seitliches Ausweichen und ein Ausweichen nach oben und unten zulassen.

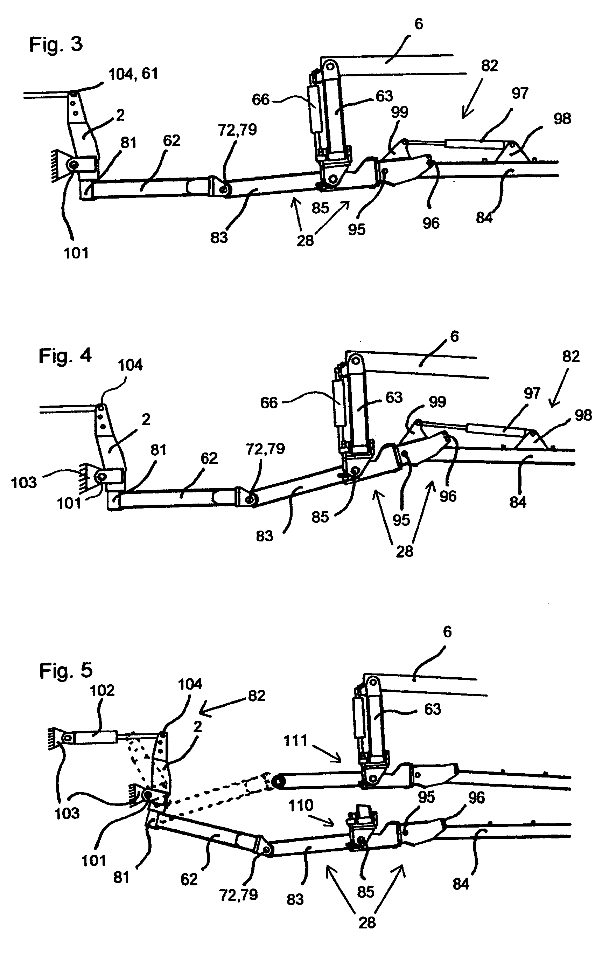

Figur 3 zeigt die Hubhydraulik 82 des Pfluges 1, mit der der Pflugrahmen 6 in Arbeitsstellung vorne vollständig ausgehoben werden kann. Die Hubhydraulik 82 bildet ein Getriebe mit Traggestänge 28 mit vorderem Teil 83 und hinterem Teil 84. Die beiden Teile 83, 84 sind über eine Schwenkachse 95 miteinander verbunden. Im Abstand zur Schwenkachse 95 ist ein Hydraulikzylinder 97 über die Arme 98, 99 mit den beiden Teilen 83, 84 verbunden. Über die Stiftverstellung 96 kann vorne die Arbeitstiefe des Pflugrahmens 6 eingestellt werden. Sie kann auch stufenlos über den Hydraulikzylinder 97 eingestellt werden, der dann mit einer mechanischen oder fernbedienbaren Hubbegrenzung ausgerüstet ist.

Über den Hydraulikzylinder 97 wird das vordere Teil 83 um die Schwenkachse 95 zum hinteren Teil 84 verschwenkt und hebt so die Drehvorrichtung 63 und damit den Pflugrahmen 6 so weit aus, dass der Pflugrahmen 6 problemlos gedreht werden kann, ohne dass traktorseitig eine Hubhydraulik vorgesehen werden muss.

Der Anbauturm 2 ist mit dem Zugfahrzeug fest verbunden und schwenkbar über die aufrechte Achse 81 mit dem Zugbalken 62 verbunden. Über die Querachse 79, die auch den vertikalen Zugpunkt 72 bildet, ist der Zugbalken 62 mit dem vorderen Teil 83 des Traggestänges 28 verbunden. Über die Querachse 79 stützt sich der Pflug-rahmen 6 über die Drehvorrichtung 63 am Zugfahrzeug ab. Die Drehvorrichtung 63 ist im Abstand zur Querachse 79 über eine quer angeordnete Achse 85 schwenkbar mit dem vorderen Teil 83 des Traggestänges 28 verbunden. Durch Ausfahren des Hydraulikzylinders 97 wird das vordere Teil 83 um die quer angeordnete Schwenkachse 95 verschwenkt und hebt dabei den vorderen Teil des Pflugrahmens 6 nebst Drehvorrichtung 63 aus.

Figur 4 zeigt eine Detailansicht der Hubhydraulik 82 in ausgehobener Stellung. Der Hydraulikzylinder 97 ist ausgefahren und hebt so den Pflugrahmen 6 mit aus. Zur Erzielung einer ausreichenden Bodenfreiheit wird der zusätzliche Pflugrahmen 32 eingeschwenkt. Dazu ist der Hydraulikzylinder 57 als sogenannter Memoryzylinder bzw. Doppelzylinder 100 ausgebildet, der zum einen mit dem Hydraulikzylinder 97 hydraulisch verbunden und zum anderen mit einem doppeltwirkenden Steuergerät des Zugfahrzeuges oder dem Hydraulikzylinder 56 des vorderen Pflugrahmens 6 hydraulisch verbunden ist.

Figur 5 zeigt schließlich eine alternative Aushubvorrichtung nicht gemäß der Erfindung, weil hier wird der Pflugrahmen 6 zusammen mit dem Traggestänge 28 und der Drehvorrichtung 63 über den Hydraulikzylinder 102 ausgehoben. Der Anbauturm 2 ist fest und schwenkbar über die Querachse 101 mit dem Anschlusspunkt 103 verbunden. Die Schwenkbarkeit des Anbauturms 2 wird über den Hydraulikzylinder 102 bewirkt. Der Hydraulikzylinder 102 ist im Punkt 104 gelenkig mit dem Anbauturm 2 verbunden. An den Anbauturm 2 ist der Zugbalken 62 über die aufrechte Achse 81 schwenkbar angeschlossen. Endseitig des Zugbalkens 62 ist das Traggestänge 28 über die Querachse 79 angeschlossen. Der Pflugrahmen 6 stützt sich über die Drehvorrichtung 63 auf das Traggestänge 28 ab. Die Drehvorrichtung 63 ist über die Querachse 85 mit dem vorderen Teil 83 des Traggestänges 28 verbunden. In eingefahrener Stellung des Hydraulikzylinders 102 befinden sich das Traggestänge 28, die Drehvorrichtung 63 und der Pflugrahmen 6 in ausgehobener Stellung 111. In dieser Stellung erfolgt die Transportfahrt und auch die Kehrfahrt auf dem Vorgewende.

In eingefahrener Stellung des Hydraulikzylinders 102 befindet sich der Pflug 6 in der Arbeitsstellung 110.

Zu erwähnen ist noch, dass der Hydraulikzylinder 57 für den Drehvorgang und für die Transportfahrt den zusätzlichen Pflugrahmen 32 einschwenkt. Dies sichert für den Drehvorgang und die Transportfahrt eine ausreichende Bodenfreiheit. In Verbindung mit einem Pflug 1 mit hydraulischer Arbeitsbreitenverstellung wird anstatt des Hydraulikzylinders 57 ein Doppelzylinder 100 eingesetzt. Dieser Doppelzylinder ist zum einen hydraulisch mit dem Hydraulikzylinder 102 und zum anderen mit einem Steuergerät des Traktors oder dem Hydraulikzylinder 56 des Pflugrahmens 6 verbunden. Aufgrund der großen Länge des Zugebalkens 62 reicht für das Ausheben des Pflugrahmens 6 ein geringer Hub des Hydraulikzylinders 102.

## Patentansprüche

1. Pflug (1) mit einem Anbauturm (2) für die Verbindung mit einem Zugfahrzeug, mit einem vorderen Pflugrahmen (6) mit mindestens zwei Pflugkörpern (7, 8) mit einem endseitig am vorderen Pflugrahmen (6) angeordnetem Fahrwerk (4) mit mindestens einem Stützrad (5) und mit eine zusätzlichen Pflugrahmen (32) mit mindestens zwei Pflugkörpern (35, 36), wobei der vordere Pflugrahmen (6) über einen Zugbalken (62) mit dem Anbauturm (2) gelenkig verbunden und über eine Drehvorrichtung (63) aus einer in die andere Arbeitsstellung sowie in die Transportstellung schwenkbar ist,
**dadurch gekennzeichnet,**
**dass** der Pflug (1) über eine eigene, vom Zugfahrzeug unabhängige Hubhydraulik (82) verfügt, die den vorderen Pflugrahmen (6) mit Drehvorrichtung (63) in der Arbeitsstellung des vorderen Pflugrahmens (6) vollständig aushebend ausgebildet und angeordnet ist, indem der vordere, die Drehvorrichtung (63) tragende und mit dem Zugbalken (62) verbundene Teil (83) eines mehrteiligen Traggestänges (28), daß ebenfalls einen hinteren Teil (84) umfaßt, von dem zum Hubhydraulik (82) gehörenden Hydraulikzylinder (97) zum hinteren Teil (84) verschwenkt werden kann.

2. Pflug nach Anspruch 1,
**dadurch gekennzeichnet,**
**dass** die beiden Teile (83) und (84) des Traggestänges (28) über eine horizontale quer zur Arbeitsrichtung angeordneten Schwenkachse (95) gelenkig miteinander verbunden sind, wobei die Schwenkachse (95) in Arbeitsrichtung mindestens 50 cm hinter einer Querachse (79) angeordnet ist, dass der Hydraulikzylinder (97) im Abstand zur Schwenkachse (95) gelenkig mit dem vorderen Teil (83) und dem hinteren Teil (84) verbunden ist und dass der Pflugrahmen (6) sich über die Drehvorrichtung (63) um eine zum vorderen Teil (83) quer angeordnete Achse (85) auf das vordere Teil (83) abstützend ausgebildet ist.

3. Pflug (1) nach Anspruch 1,
**dadurch gekennzeichnet,**
**dass** ein Hydraulikzylinder (102) im Abstand zu einer mit einem Anschlusspunkt (103) ausgerüsteten Querachse (101), um die der Anbauturm schwenkbar ist mit dem Anbauturm (2) und damit dem Zugfahrzeug verbunden ist und dass der Zugbalken (62) endseitig im Abstand von mindestens 50 cm eine Querachse (79) aufweist, über die der vordere Teil (83) des Traggestänges (28) gelenkig mit dem Zugbalken (62) verbunden und bei Betätigung des Hydraulikzylinders (102) den Pflugrahmen (6) aushebend ausgebildet ist.

4. Pflug nach einem der vorhergehenden Ansprüche,
**dadurch gekennzeichnet,**
**dass** das Traggestänge (28) mindestens zweiteilig mit dem vorderem Teil (83) und dem hinterem Teil (84) ausgebildet ist und mit dem vorderen Teil (83) über eine zugleich den Zugpunkt (72) bildende Querachse (79) und den Zugbalken (62) mit dem Anbauturm (2) und mit dem hinteren Teil (84) kreuzgelenkartig über ein Gelenk (80) mit dem Pflugrahmen (6) verbunden ist.

5. Pflug nach einem der vorhergehenden Ansprüche,
**dadurch gekennzeichnet,**
**dass** der Zugbalken (62) über eine aufrechte Achse (81) schwenkbar mit dem Anbauturm (2) verbunden ist.

6. Pflug nach einem der vorhergehenden Ansprüche,
**dadurch gekennzeichnet,**
**dass** der zusätzliche Pflugrahmen (32) mittelbar mit dem Pflugrahmen (6) längsverschiebbar, kardanisch und verdrehfest verbunden ist und dass zwischen dem Pflugrahmen (6) und dem zusätzlichen Pflugrahmen (32) ein Regelgetriebe (21) vorgesehen ist, das die Höhenlage des Zugpunktes (24) des zusätzlichen Pflugrahmens (32) regelnd ausgebildet ist.

7. Pflug nach einem der vorhergehenden Ansprüche,
**dadurch gekennzeichnet,**
**dass** das Fahrwerk (4) eine in Arbeitsstellung des Pfluges (1) horizontal und in Längsrichtung angeordnete Schwenklagerung (12) mit Schwenkachse (13) und einen um die Schwenkachse (13) schwenkenden Kuppelrahmen (3) aufweist, der einerseits mit dem hinteren Ende des Pflugrahmens (6) verbunden ist und andererseits eine Kuppelrahmenerweiterung (20) aufweist, wobei der Kuppelrahmen (3) eine kulissenförmige Führung (25) aufweist, die mit der Kulisse (34) der Kuppelrahmenerweiterung (20) längsverschiebbar, kardanisch und verdrehfest verbunden ist.

8. Pflug nach einem der vorhergehenden Ansprüche,
**dadurch gekennzeichnet,**
**dass** die Kuppelrahmenerweiterung (20) eine in Arbeitsstellung des Pfluges (1) horizontal und in Längsrichtung angeordnete Schwenklagerung (40) mit Schwenkachse (58) aufweist mit schwenkbar zur Kuppelrahmenerweiterung (20) angeordnetem Stützarm (41) und Stabilisierungsstreben (59) und dass der zusätzliche Pflugrahmen (32) mit der Kuppelrahmenerweiterung verdrehfest verbunden ausgebildet ist.

9. Pflug nach einem der vorhergehenden Ansprüche,
**dadurch gekennzeichnet,**
**dass** das Fahrwerk (4) einen Zugarm (22) mit Zugachse (24) aufweist, die den Stützarm (41) und damit die Kuppelrahmenerweiterung (20) mit zusätzlichem Pflugrahmen (32) ziehend ausgebildet ist.

10. Pflug nach einem der vorhergehenden Ansprüche,
**dadurch gekennzeichnet,**
**dass** das Regelgetriebe (21) aus der kulissenförmigen Führung (25) mit Kulisse (34) in Verbindung mit dem Zugarm (22), der Zugachse (27) und dem Stützarm (41) gebildet wird.

11. Pflug nach einem der vorhergehenden Ansprüche,
**dadurch gekennzeichnet,**
**dass** der Stützarm (41) eine Kurvenbahn aufweist und auf der Zugachse (27) eine Rolle vorgesehen ist, die auf der Kurvenbahn abrollend angeordnet ist.

12. Pflug nach einem der vorhergehenden Ansprüche,
**dadurch gekennzeichnet,**
**dass** auf der Zugachse (27) ein Hebel drehbar gelagert ist, der die Rolle aufnimmt und Anlenkpunkte für einen Zuglenker (50) und einen Lenker (51) vorgesehen sind, wobei der Zuglenker (50) mit dem Zugarm (22) und der Lenker (51) mit dem Stützarm (41) verbunden und zusammen mit der kulissenförmigen Führung (25) als Regelgetriebe (21) arbeitend ausgebildet sind.

13. Pflug nach einem der vorhergehenden Ansprüche,
**dadurch gekennzeichnet,**
**dass** der Zuglenker (50) längenveränderbar, vorzugsweise als Hydraulikzylinder (55) ausgebildet ist.

14. Pflug nach einem der vorhergehenden Ansprüche,
**dadurch gekennzeichnet,**
**dass** die Pflugkörper (7, 8) des Pflugrahmens (6) schwenkbar mit dem Pflugrahmen (6) mit einer die Parallelführung der Pflugkörper (6) bewirkenden Stange (11) verbunden sind, dass der mit dem Fahrwerk (4) verbundene Kuppelrahmen (3) über eine senkrechte Achse (15) mit dem Pflugrahmen (6) verbunden und über eine Steuerstange (16) parallel zu den Pflugkörpern (7, 8) führbar ausgebildet ist.

15. Pflug nach einem der vorhergehenden Ansprüche,
**dadurch gekennzeichnet,**
**dass** sowohl der Pflugrahmen (6) als auch der zusätzliche Pflugrahmen (32) über je einen Hydraulikzylinder (56, 57) um die senkrechten Achsen (15) bzw. (30) verschwenkbar ausgebildet sind.

16. Pflug nach einem der vorhergehenden Ansprüche,
**dadurch gekennzeichnet,**
**dass** die Hydraulikzylinder (56, 57) über einen schlepperseitigen Mengenteiler jeweils mit der für die parallele Verschwenkung der einzelnen Pflugkörper (7, 8) und (35, 36) erforderlichen Ölmenge versorgt ausgebildet sind.

17. Pflug nach einem der vorhergehenden Ansprüche,
**dadurch gekennzeichnet,**
**dass** der Hydraulikzylinder (57) für die Verstellung des zusätzlichen Pflugrahmens (32) im Durchmesser gleich oder kleiner ausgebildet ist als der entsprechende Hydraulikzylinder (56) des Pflugrahmens und dass jeder Hydraulikzylinder (56, 57) mit fernbedienbaren, den Hubweg der Hydraulikzylinder (56, 57) begrenzenden Begrenzungsanschlägen und/oder -ventilen ausgerüstet sind.

18. Pflug nach einem der vorhergehenden Ansprüche,
**dadurch gekennzeichnet,**
**dass** die beiden Hydraulikzylinder (56, 57) hydraulisch kommunizierend miteinander verbunden sind.

19. Pflug nach einem der vorhergehenden Ansprüche,
**dadurch gekennzeichnet,**
**dass** die Hydraulikzylinder (56, 57) unabhängig voneinander betätigbar ausgebildet sind, dass die Arbeitsbreite pro Pflugkörper (35, 36) des zusätzlichen Pflugrahmens (32) unabhängig von der Arbeitsbreite des Pflugrahmens (32) breiter oder schmaler einstellbar ist und dass die kardanische Verbindung des Pflugrahmens (6) mit dem zusätzlichen Pflugrahmen (32) eine seitliche Verschwenkbarkeit des zusätzlichen Pflugrahmens (32) von mindestens + 10° und - 10° zulassend ausgebildet ist.

20. Pflug nach einem der vorhergehenden Ansprüche,
**dadurch gekennzeichnet,**
**dass** die Hubhydraulik (82), die Stellvorrichtungen für die Arbeitstiefe, die Neigung, die Arbeitsbreite pro Pflugkörper (7, 8, 35, 36) und die Drehvorrichtung (63) des Pfluges (1) über einen Bordcomputer betätigbar ausgebildet sind, und dass das Ausheben, das Absenken und das Drehen des Pflugrahmens (6) und des zusätzlichen Pflugrahmens (32) jeweils am Feldende und -anfang automatisch ablaufend ausgebildet sind.

21. Pflug nach einem der vorhergehenden Ansprüche,
**dadurch gekennzeichnet,**
**dass** der zusätzliche Pflugrahmen (32) vor dem Drehvorgang oder während des Drehvorganges einschwenkbar und nach Beendigung dieses Drehvorganges wieder automatisch ausschwenkend ausgebildet ist.

## Claims

1. Plough (1) with a hitch (2) for connection to a pulling vehicle, with a leading plough frame (6) with at least two plough bodies (7, 8) with a running gear (4) arranged at the end of the leading plough frame (6) and with at least one support wheel (5) and with an additional plough frame (32) with at least two plough bodies (35, 36), wherein the leading plough frame (6) is articulated via a traction beam (62) to the hitch (2) and can be swivelled via a rotating device (63) from one operating position into another operating position and into the transportation position, **characterised in that** the plough (1) has its own lifting hydraulic system (82), independent of the pulling vehicle, which is designed and arranged to completely raise the leading plough frame (6) with a rotating device (63) in the operating position of the leading plough frame (6), **in that** the leading part (83) of a multi-part supporting rod linkage (28) carrying the rotating device (63) and connected to the traction beam (62) and likewise comprising a trailing part (84) can be swivelled by the hydraulic cylinder (97) belonging to the lifting hydraulic system (82) toward the trailing part (84).

2. Plough according to claim 1, **characterised in that** the two parts (83) and (84) of the supporting rod linkage (28) are articulated to one another via a horizontal swivel pin (95) arranged transversely to the operating direction, the swivel pin (95) being arranged at least 50 cm behind a transverse pin (79) in the operating direction, **in that** the hydraulic cylinder (97) is articulated at a spacing from the swivel pin (95) to the leading part (83) and the trailing part (84), and **in that** the plough frame (6) is designed so as to be supported on the leading part (83) via the rotating device (63) about a pin (85) transversely arranged with respect to the leading part (83).

3. Plough (1) according to claim 1, **characterised in that** a hydraulic cylinder (102) at a spacing from a transverse pin (101) equipped with an attachment point (103), about which pin the hitch can be swivelled, is connected to the hitch (2) and therefore the pulling vehicle, and **in that** at the end, at a spacing of at least 50 cm, the traction beam (62) has a transverse pin (79) via which the leading part (83) of the supporting rod linkage (28) is articulated to the traction beam (62) and when the hydraulic cylinder (102) is actuated raises the plough frame (6).

4. Plough according to any of the preceding claims, **characterised in that** the supporting rod linkage (28) is constructed in at least two parts with the leading part (83) and the trailing part (84) and is connected to the leading part (83) via a transverse pin (79), also forming the pull centre (72), and the traction beam (62) to the hitch (2) and is connected with the trailing part (84) via a joint (80) to the plough frame (6) in the manner of a cardan joint.

5. Plough according to any of the preceding claims, **characterised in that** the traction beam (62) is connected, so as to swivel, via an upright shaft (81) to the hitch (2).

6. Plough according to any of the preceding claims, **characterised in that** the additional plough frame (32) is cardanically and non-rotatably connected directly to the plough frame (6) so as to be longitudinal displaceable, and/in that provided between the plough frame (6) and the additional plough frame (32) is a control gear (21) designed to control the height of the pull centre (24) of the additional plough frame (32).

7. Plough according to any of the preceding claims, **characterised in that** the running gear (4) comprises a swivel bearing (12), with a swivel pin (13), which is horizontal and arranged in the longitudinal direction in the operating position of the plough (1) and a coupling frame (3) swivelling about the swivel pin (13), the frame being connected, on the one hand, to the trailing end of the plough frame (6) and, on the other hand, comprising a coupling frame extension (20), the coupling frame (3) comprising a link-like guide (25) connected longitudinally displaceably, cardanically and non-rotatably to the link (34) of the coupling frame extension (20).

8. Plough according to any of the preceding claims, **characterised in that** the coupling frame extension (20) comprises a swivel bearing (40), with swivel pin (58), arranged horizontally and in the longitudinal direction in the operating position of the plough (1) with a support arm (41), arranged so as to swivel with respect to the coupling frame extension (20) and stabilising struts (59), and **in that** the additional plough frame (32) is connected non-rotatably to the coupling frame extension.

9. Plough according to any of the preceding claims, **characterised in that** the running gear (4) comprises a traction arm (22) with traction shaft (24) designed so as to pull the support arm (41) and therefore the coupling frame extension (20) with the additional plough frame (32).

10. Plough according to any of the preceding claims, **characterised in that** the control gear (21) is formed from the link-like guide (25) with link (34) in conjunction with the traction arm (22), the traction shaft (27) and the support arm (41).

11. Plough according to any of the preceding claims, **characterised in that** the support arm (41) has a curved path and a roller, arranged so as to roll on the curved path, is provided on the traction shaft (27).

12. Plough according to any of the preceding claims, **characterised in that** a lever is rotatably mounted on the traction shaft (27) and picks up the roller, and attachment points are provided for a tie member (50) and a connecting rod (51), the tie member (50) being connected by the traction arm (22) and the connecting rod (51) to the support arm (41) and together with the link-like guide (25) are designed to operate as a control gear (21).

13. Plough according to any of the preceding claims, **characterised in that** the tie member (50) is designed so as to be changeable in length, preferably as a hydraulic cylinder (55).

14. Plough according to any of the preceding claims, **characterised in that** the plough members (7, 8) of the plough frame (6) are connected, so as to swivel, to the plough frame (6) by a rod (11) bringing about parallel guidance of the plough bodies (6), **in that** the coupling frame (3) connected to the running gear (4) is connected via a perpendicular shaft (15) to the plough frame (6) and can be guided via a control rod (16) parallel to the plough bodies (7, 8).

15. Plough according to any of the preceding claims, **characterised in that** the plough frame (6) and the additional plough frame (32) are designed so as to be able to swivel about the perpendicular shafts (15) and (30) via a respective hydraulic cylinder (56, 57).

16. Plough according to any of the preceding claims, **characterised in that** the hydraulic cylinders (56, 57) are designed so as to be supplied with the quantity of oil required for simultaneous swivelling of the individual plough bodies (7, 8) and (35, 36) via a tractor-side fuel distributor.

17. Plough according to any of the preceding claims, **characterised in that** for adjusting the additional plough frame (32), the hydraulic cylinder (57) is designed so as to be equal or smaller in diameter than the corresponding hydraulic cylinder (56) of the plough frame, and **in that** each hydraulic cylinder (56, 57) is equipped with remote controllable limiting stops and/or valves limiting the lifting travel of the hydraulic cylinders (56, 57).

18. Plough according to any of the preceding claims, **characterised in that** the two hydraulic cylinders (56, 57) are connected to one another so as to communicate hydraulically.

19. Plough according to any of the preceding claims, **characterised in that** the hydraulic cylinders (56, 57) are designed so as to be actuable independently of one another, **in that** the operating width per plough member (35, 36) of the additional plough frame (32) can be adjusted so as to be wider or narrower independently of the operating width of the plough frame (32) and **in that** the cardanic connection of the plough frame (6) to the additional plough frame (32) is designed so as to allow lateral swivelling of the additional plough frame (32) of at least +10° and -10°.

20. Plough according to any of the preceding claims, **characterised in that** the lifting hydraulic system (82), the adjusting devices for the operating depth, the inclination, the operating width per plough member (7, 8, 35, 36) and the rotating device (63) of the plough (1) can be actuated via an on-board computer, and **in that** raising, lowering and rotating of the plough frame (6) and of the additional plough frame (32) are each designed so as to automatically take place at the end and beginning of the field.

21. Plough according to any of the preceding claims, **characterised in that** the additional plough frame (32) is designed so it can be swivelled inwards prior to the rotating process or during the rotating process and is automatically swivelled out again once this rotating process has finished.

## Revendications

1. Charrue (1) avec une flèche d'attelage (2) de liaison avec un véhicule de traction, avec un châssis avant de charrue (6) muni d'au moins deux corps de charrue (7,8) avec un chariot (4) disposé à l'extrémité du châssis avant de charrue (6) , avec au moins une roue d'appui (5) et un châssis de charrue supplémentaire (32) avec au moins deux corps de charrue (35, 36), dans lequel le châssis de charrue avant (6) est relié de façon articulée à la flèche d'attelage (2) par un tirant (62) et peut osciller par l'intermédiaire d'un dispositif de rotation (63) d'une position de travail dans l'autre position de travail ainsi que dans la position de transport,
**caractérisé en ce que**
la charrue (1) dispose d'une installation hydraulique de levage (82) indépendante du véhicule de traction, qui est agencée de façon à soulever complètement le châssis avant de charrue (6) par le dispositif de rotation (63) dans la position de travail du châssis avant de charrue (6), par le fait que la partie avant (83) portant le dispositif de rotation (63) et reliée au tirant (62), d'une tringlerie porteuse (28) en plusieurs parties, qui comprend également une partie arrière (84), peut tourner par rapport à la partie arrière (84) au moyen du vérin hydraulique (97) appartenant à l'installation hydraulique de levage (82).

2. Charrue selon la revendication 1, **caractérisée en ce que** les deux parties (83) et (84) de la tringlerie porteuse (28) sont reliées l'une à l'autre de manière articulée par un axe d'oscillation (95) disposé horizontalement transversalement à la direction de travail, l'axe d'oscillation (95) étant disposé dans la direction de travail à au moins 50 cm derrière un axe transversal (79), **en ce que** le vérin hydraulique (97) est relié de manière articulée, à distance de l'axe d'oscillation (95), à la partie avant (83) et à la partie arrière (84), et **en ce que** le châssis de charrue (6) est agencé en appui sur la partie avant (83) par le dispositif de rotation (63), autour d'un axe (85) disposé transversalement à la partie avant (83).

3. Charrue (1) selon la revendication 1, **caractérisée en ce qu'**un vérin hydraulique (102) est relié à la flèche d'attelage (2) et donc au véhicule de traction, à distance d'un axe transversal (101) qui est équipé d'un point de jonction (103) et autour duquel la flèche d'attelage peut tourner, et **en ce que**, à son extrémité à une distance d'au moins 50 cm, le tirant (62) comporte un axe transversal (79) par lequel Ja partie avant (83) de la tringlerie porteuse (28) est reliée de manière articulée au tirant (62), et est conformé de façon à soulever le châssis de charrue (6) lors de l'actionnement du vérin hydraulique (102).

4. Charrue selon l'une des revendications précédentes, **caractérisée en ce que** la tringlerie porteuse (28) est réalisée en au moins deux parties avec la partie avant (83) et la partie arrière (84), et est reliée au châssis de charrue (6) avec la partie avant (83) par un axe transversal (79) constituant en même temps le point de traction (72) et par le tirant (62) avec la flèche d'attelage (2), ainsi qu'à la partie arrière (84) par un joint articulé (80) à la façon d'un joint de cardan.

5. Charrue selon l'une des revendications précédentes, **caractérisée en ce que** le tirant (62) est relié de façon oscillante à la flèche d'attelage (2) par un axe vertical (81).

6. Charrue selon l'une des revendications précédentes, **caractérisée en ce que** le châssis de charrue supplémentaire (32) est relié indirectement au châssis de charrue (6), fixe en rotation, à la cardan et de manière à pouvoir coulisser longitudinalement, et **en ce que**, entre le châssis de charrue (6) et le châssis de charrue supplémentaire (32), il est prévu un mécanisme de réglage (21) qui est conformé pour régler la hauteur du point de traction (24) du châssis de charrue supplémentaire (32).

7. Charrue selon l'une des revendications précédentes, **caractérisée en ce que** le mécanisme de déplacement (4) comporte une structure oscillante (12) horizontale dans la position de travail de la charrue (1) et disposée dans la direction longitudinale, avec un axe d'oscillation (13) et un bâti d'accouplement (3) oscillant autour de l'axe d'oscillation (13), qui d'une part est relié à l'extrémité arrière du châssis de charrue (6) et d'autre part comporte un élargissement (20) du bâti d'accouplement, dans lequel le bâti d'accouplement (3) présente un dispositif de guidage (25) en forme de coulisse qui est relié à la coulisse (34) de l'élargissement (20) du bâti d'accouplement de manière fixe en rotation, à la cardan et en pouvant coulisser longitudinalement.

8. Charrue selon l'une des revendications précédentes, **caractérisée en ce que** l'élargissement (20) du bâti d'accouplement comporte une structure oscillante (40) avec un axe d'oscillation (58), disposée horizontalement et dans la direction longitudinale dans la position de travail de la charrue (1), avec un bras d'appui (41) disposé oscillant par rapport à l'élargissement (20) du bâti d'accouplement et des étais de stabilisation (59), et **en ce que** le châssis de charrue supplémentaire (32) est agencé de façon à être relié fixe en rotation à l'élargissement du bâti d'accouplement.

9. Charrue selon l'une des revendications précédentes, **caractérisée en ce que** le chariot (4) comporte un bras de traction (22) avec un axe de traction (24), qui est agencé de façon à tirer le bras d'appui (41) et donc l'élargissement du bâti d'accouplement (20) avec le châssis de charrue supplémentaire (32).

10. Charrue selon l'une des revendications précédentes, **caractérisée en ce que** le mécanisme de réglage (21) est constitué par le dispositif de guidage (25) en forme de coulisse avec la coulisse (34) en liaison avec le bras de traction (22), par l'axe de traction (27) et par le bras d'appui (41).

11. Charrue selon l'une des revendications précédentes, **caractérisée en ce que** le bras d'appui (41) comporte un chemin incurvé, et il est prévu sur l'axe de traction (27) un rouleau disposé de façon à pouvoir rouler sur le chemin incurvé.

12. Charrue selon l'une des revendications précédentes, **caractérisée en ce que** sur l'axe de traction (27) est monté un levier rotatif qui reçoit le rouleau, et des points d'articulation pour une bielle de traction (50) et une bielle (51) sont prévus, la bielle de traction (50) est reliée au bras de traction (22) et la bielle (51) est reliée au bras d'appui (41), et elles sont agencées de façon à coopérer ensemble avec le dispositif de guidage (25) en forme de coulisse, en tant que mécanisme de réglage (21).

13. Charrue selon l'une des revendications précédentes, **caractérisée en ce que** la bielle de traction (50) est réalisée avec une longueur variable, de préférence comme un vérin hydraulique (55).

14. Charrue selon l'une des revendications précédentes, **caractérisée en ce que** les corps de charrue (7,8) du châssis de charrue (6) sont reliés de façon oscillante au châssis de charrue (6) par une tringle (11) réalisant le guidage parallèle des corps de charrue (7,8), **en ce que** le bâti d'accouplement (3) relié au chariot (4) est relié par un axe vertical (15) au châssis de charrue (6), et est agencé de façon à pouvoir être guidé parallèlement aux corps de charrue (7,8) par l'intermédiaire d'une tringle de commande (16).

15. Charrue selon l'une des revendications précédentes, **caractérisée en ce qu'**aussi bien le châssis de charrue (6) que le châssis de charrue supplémentaire (32) sont conformés de façon à pouvoir osciller autour des axes verticaux (15) et (30) par l'intermédiaire d'un vérin hydraulique (56, 57).

16. Charrue selon l'une des revendications précédentes, **caractérisée en ce que** les vérins hydrauliques (56,57) sont agencés pour être alimentés par la quantité d'huile nécessaire par un diviseur de débit du côté du tracteur, pour la rotation en parallèle des différents corps de charrue (7,8) et (35,36).

17. Charrue selon l'une des revendications précédentes, **caractérisée en ce que** le vérin hydraulique (57) pour le réglage du châssis supplémentaire de charrue (32) est agencé avec un diamètre égal ou inférieur à celui du vérin hydraulique correspondant (56) du châssis de charrue, et **en ce que** les vérins hydrauliques (56, 57) sont équipés de butées et/ou de clapets de limitation limitant la course de levage des vérins hydrauliques (56,57).

18. Charrue selon l'une des revendications précédentes, **caractérisée en ce que** les deux vérins hydrauliques (56,57) sont reliés l'un à l'autre de façon à pouvoir communiquer par voie hydraulique.

19. Charrue selon l'une des revendications précédentes, **caractérisée en ce que** les vérins hydrauliques (56,57) sont agencés de façon à pouvoir être actionnés indépendamment l'un de l'autre, **en ce que** la largeur de travail par corps de charrue (35,36) du châssis de charrue supplémentaire (32) est réglable plus large ou plus étroite indépendamment de la largeur de travail du châssis de charrue (32), et **en ce que** la liaison à la cardan du châssis de charrue (6) avec le châssis de charrue supplémentaire (32) est réalisée de façon à autoriser une possibilité d'oscillation latérale du châssis de charrue supplémentaire (32) d'au moins + 10° et -10°.

20. Charrue selon l'une des revendications précédentes, **caractérisée en ce que** l'installation hydraulique de levage (82), les dispositifs de réglage de la profondeur de travail, de l'inclinaison, de la largeur de travail par corps de charrue (7,8,35,36) et le dispositif de rotation (63) de la charrue (1) sont réalisés de façon à pouvoir être actionnés par un ordinateur de bord, et **en ce que** le levage, l'abaissement et la rotation du châssis de charrue (6) et du châssis de charrue supplémentaire (32) sont réalisés respectivement à l'extrémité du champ et à son début en se déroulant automatiquement.

21. Charrue selon l'une des revendications précédentes, **caractérisée en ce que** le châssis de charrue supplémentaire (32) est réalisé de façon à pouvoir être rentré avant le processus de rotation ou pendant le processus de rotation, et en pivotant à nouveau automatiquement après l'achèvement de ce processus de rotation.
